# EUROPEAN PATENT SPECIFICATION

(11) **EP 2 884 251 B1**
(45) Date of publication and mention of the grant of the patent: **22.03.2017**
(21) Application number: 13196644.2
(22) Date of filing: 11.12.2013
(51) Int. Cl.: G01K 1/14

(54) **Modular connecting piece**
Modulares Verbindungsstück
Pièce de raccordement modulaire

(43) Date of publication of application: 17.06.2015
(60) Divisional application: 15200116.0
(73) Proprietor: ENDRESS + HAUSER WETZER GmbH + Co. KG, 87484 Nesselwang (DE)
(72) Inventor: Casirati, Paolo, 24047 Treviglio (IT)
(74) Representative: Andres, Angelika Maria

(56) References cited:
- DE-C1- 10 106 475
- US-A- 2 802 894
- US-A- 3 007 340
- US-A- 3 580 744
- US-A- 6 059 453

## Description

The present invention concerns a modular connecting piece for connecting a terminal head to a protecting tube. Further on the present invention concerns a measuring insert and an arrangement comprising such a modular connecting piece and such a measuring insert as well as a kit of parts comprising those elements.

Gauges are already known in the state of the art. For example the European Patent Application EP 356593 A1 discloses a thermocouple temperature monitor for use in a high temperature reactor. There, the thermocouple wires are enclosed in a gas-tight metal protection sheath which is inserted inside a multi-segment refractory thermal well. An annular space formed between the sheath and the thermal well is continuously purged with a small quantity of a gas. Hence gasification products residing from the process are neutralized within the annular space by reaction with the purging gas.

Also the US Patent Application Publication US 3923552 discloses a thermocouple assembly that has an outer sheath positioned about a thermocouple probe. The outer sheath includes a casing and a tube joined at one end about a washer to form a hermetic seal at room temperature capable of withstanding atmospheric pressure. The casing, tube and washer each have different coefficients of expansion to form a hermetic seal when the outer sheath is heated capable of withstanding pressures in excess of 1,000 psi. The thermocouple probe has a plurality of thermocouple elements hermetically sealed in an inner sheath. The thermocouple elements are mutually aligned and spaced a predetermined distance from each other at the measuring junction. A hermetic seal is provided at the union of the outer sheath and the thermocouple assembly.

Also a similar thermometric device has become known from the website from http://claustemp.com/00-htp01.pdf. There, an arrangement is disclosed having a terminal head in which a terminal block is located. Terminal block and terminal head serve for connecting the thermocouple wires to a conduit to convey he measurement signal.

The thermocouples are connected to this terminal block and guided into a protective tube, i.e. a thermowell.

All in all, the thermocouple is arranged inside a process containment pressure body. This body has an inlet for receiving a purge gas into a hollow chamber of the body in which the thermocouple as well as a ceramic support insulator is arranged. The ceramic support insulator has a bore through which the purge gas can travel from an upper end to a lower end and finally travel in between the ceramic support insulator and the thermowell through a vent.

However all these installations have in common that the thermocouple and the measuring insert respectively are not replaceable, i.e. not replaceable directly in the field (without having to shut down the process).

US 3,007,340 describes a gauge for measuring the temperature of a fluid flowing in a conduit.

Hence it is an object of the present invention to improve the existing gauges present in today s process plants.

The problem is solved by way of a modular connecting piece as in claim 1.

Hence a modular connecting piece is suggested, especially for a temperature detecting device like a thermometer: the whole thermometric device allows the use of a sensing element (insert) in harmful conditions avoiding the contact with polluting elements e.g. via a purging gas that flows through the insert itself. It is a feature of the invention that the insert can be replaced without shutting down the facility. The thermowell, or external sheath, can be made of ceramic and/or metal materials.

The modular connecting piece forms -when assembled- a neck, e.g. with one or more inlets and outlets for a purging gas, of a thermometric device: the tightness is achieved via several sealing barriers and the path the gas must follow is obtained combining the thermowell and the neck with the sensing element (insert).

If the sensing element, e.g. an insert, especially a thermocouple, fails, it can be replaced, dismantling the barriers without shutting down the facility, if the external sheath is undamaged: the possibility of avoiding the shutdown allows the end user to save money, time and process material.

In an embodiment of the modular connecting piece the first mounting part is mechanically connectable to the second mounting part in a gas tight manner by way of a gasket or a group of gaskets between a furrow of the first mounting part and a furrow of the second mounting part.

According to the invention the first mounting part has an inlet for letting a purging gas flow into the first chamber of the first mounting part.

According to the invention the second mounting part has an outlet for letting a purging gas flow out of the second chamber of the second mounting part.

Hence the first chamber is upstream close to the head and the second chamber is downstream, thereby the only way for the gas to move from the upstream chamber to the downstream one is to pass through e.g. the sensing element itself, the insert. The barriers, obtained involving gaskets, o-rings and/or compression fittings, do not allow the purging gas to get out to the external environment, to the process or to go from one chamber to another bypassing the insert. When the whole system is up and running, some polluting elements can get into the temperature detecting assembly because of the porosity of ceramic sheaths or cracks on metal sheaths: the purging gas cleans out the hot junction of the thermocouple, preventing the harmful substances from attacking the sensing element and damaging it. This is useful when the sensing element is made of Platinum alloys, because these materials reacts with a lot of process substances causing a loss of signal and information and making the life of the device very short.

The structure of the modular connecting piece and/or the thermometric device can be used in another case, too: when the sensing element is made of materials that cannot work in oxidizing environment and the Oxygen must be removed from the inner volume of the device. When the thermocouple is made of Tungsten based alloys, the presence of the Oxygen can lead to a very short life of the device at high temperature: the purging gas removes the Oxygen increasing the life of the sensor.

Therefore in case e.g. the sensor of the measuring insert, for example the thermocouple, fails, it can be replaced, e.g.by dismantling the barriers without shutting down the facility, if the external sheath is undamaged: the possibility of avoiding the shutdown allows the end user to save money, time and process material.

In an embodiment of the modular connecting piece the second mounting part has an opening through which the measuring insert is insertable into the protective tube, and wherein a gasket or a group of gaskets is provided in the second mounting part which gasket or a group of gaskets seals the opening to the protective tube in a gas tight manner, when the insert is inserted into the opening.

In an embodiment of the modular connecting piece a spring element is provided in the second mounting part, which spring element serves to deform and press the gasket for sealing the opening towards the first mounting part and the gasket for sealing the opening towards the protective tube on opposite sides of the second chamber of the second mounting part. The spring element can e.g. be a spring itself or any other elastic element that provides for a restoring force.

In an embodiment of the modular connecting piece a compression fitting or a welding welded on the second mounting part extends into the first chamber of the first mounting part, when connected to the second mounting part.

The invention is described in greater detail in the figures following:
Fig. 1: shows a cross section of the whole thermometric assembly and a possible path for the purging gas,
Fig. 2: shows a cross section of the connecting piece, i.e. neck, and
Fig. 3a, 3b: shows a perspective and a cross section view of an Insert respectively, and
Fig. 4a, 4b: shows a perspective view and a cross section view of a thermowell respectively.

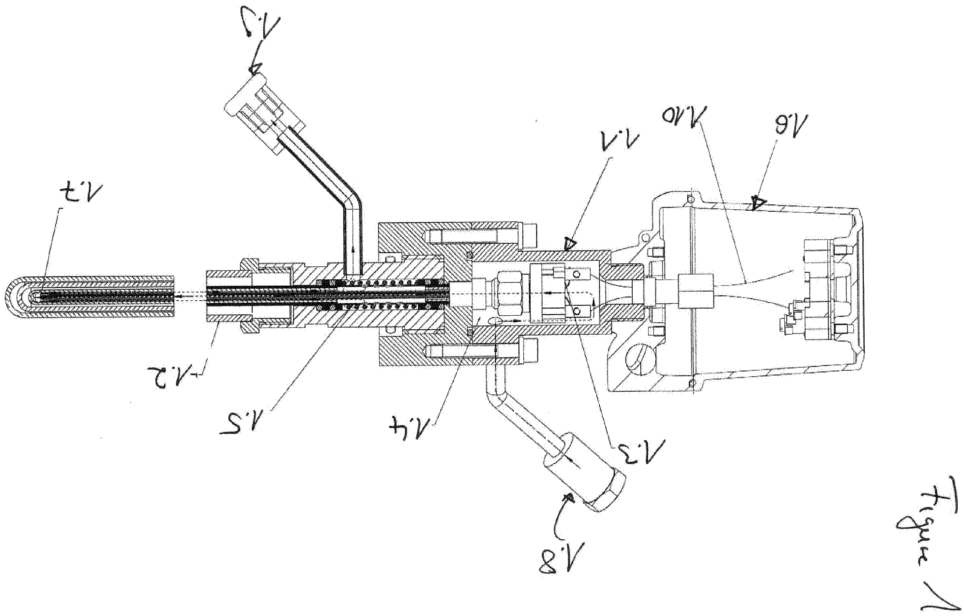

Figure 1 shows a gauge as it may be used in a process plant. In order to have an efficient purging action on the temperature sensing element, the inner volume of the whole device is divided into two chambers: the inlet one 1.4, 2.12 and the outlet chamber 1.5, 2.13. The link between the inlet and the outlet and hence between the first chamber and the second chamber is the sensing element itself 1.3. The purging gas moves inside the sub-assembly made of the neck 1.1 and the sensor 1.3. In figure 1 the inlet is identified by reference sign 1.8 wherein the outlet is identified by reference sign 1.9.

Also the way the purging gas or fluid is flowing through the modular connecting part (2.2, 2.3, 2.4) and the measuring insert 3, and the protective tube is depicted by the arrows present in figure 1.

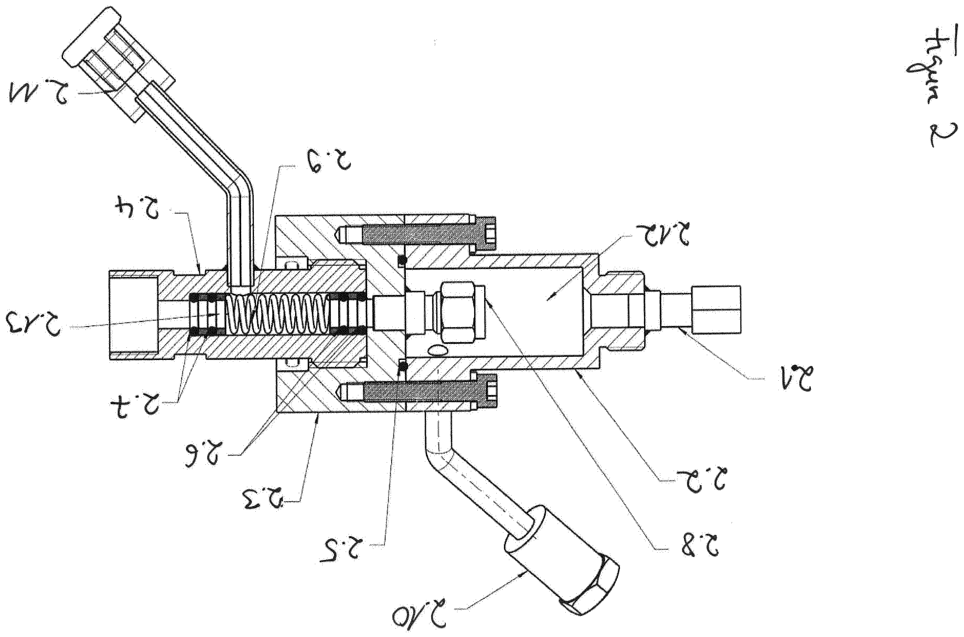

In figure 2 there is a detailed view of the neck: the inlet chamber 2.12 is delimited by a cap 2.2, a body 2.3, an inlet 2.10, a gasket 2.5 and a multiway barrier 2.1; the outlet chamber is obtained by the combination of the body 2.3, the sleeve 2.4, the outlet 2.11 and the outlet gaskets 2.6 and 2.7. Hence the modular connecting piece comprises or essentially consists of a first or upper mounting part, i.e. the cap 2.2., and a second or lower mounting part, i.e. body 2.3 and sleeve 2.3.

The cap 2.2 is engaged on the body 2.3 with some bolts 2.13 and between them the gasket 2.5 is compressed: this is a barrier that keeps the purging gas from coming out of the thermometer. The second barrier of the inlet chamber 1.4, 2.12 is the multiway barrier 2.1: this part can be a compression fitting that seals the extension cables 1.10 of the thermocouple. The third barrier is the compression fitting 2.8 that is engaged on the drilled tube 3.2 of the insert 1.3 and it is welded on the body 2.3: the compression fitting prevents the purging gas to come into the outlet chamber 1.5, 2.13 by passing the insert 1.3. Instead of the bolts 2.13 any other suitable means for connecting the cap 2.2. to the body 2.3 can be used.

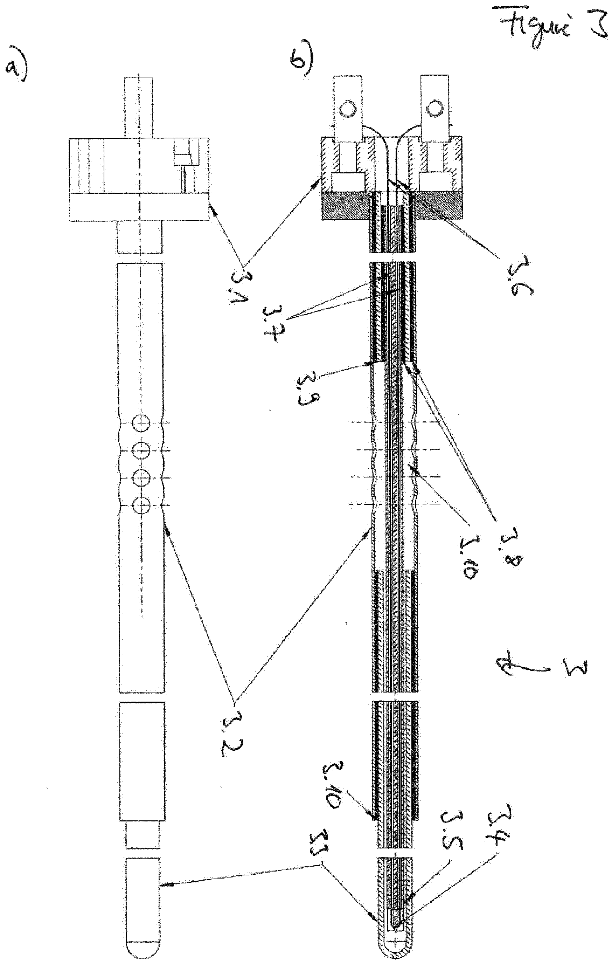

The insert 1.3 is made of thermocouple wires 3.6, a ceramic insulator 3.5, a terminal block 3.1, a drilled tube 3.2 and an external ceramic sheath 3.3 as depicted e.g. in figure 3. Instead of thermocouple wires any other connecting wires can be used to connect e.g. a temperature resistance so called RTD or any other type of sensor element.

The first mounting part comprises at least the cap 2.2 wherein the second mounting part comprises either the body 2.3 and/or the sleeve 2.4. Hence the second mounting part itself can be modular. However it can also be construed that the first mounting part comprises the cap 2.2 and the body 2.3 wherein the second mounting part comprises only the sleeve 2.4.

When the purging gas is pushed into the inlet chamber 1.4, 2.12, the only way to come into the outlet chamber 1.5, 2.13 is to pass through the bores 3.7 of the insert 1.3: the thermocouples wires 3.6 are put into these bores 3.7 and they are connected to a terminal block 3.1 at the cold end and they are welded or connected together at the hot junction 3.4, the zone of the insert 1.3 in contact with the process temperature.

The terminal block 3.1 is connected to the drilled tube 3.2 and the ceramic insulator 3.5 is supported by the drilled tube 3.2 by means of a ceramic spacer 3.9 glued or cemented by a gluing compound 3.8 to the drilled tube 3.2 and to insulator 3.5. The gluing compound 3.8 and 3.10 must be impermeable to gases.

Because of the aforementioned barriers, the gas is pushed through the bores 3.7 of the insert 1.3 and comes out at the hot junction 3.4. Then, the purging gas passes between the ceramic insulator 3.5 and the external sheath 3.3 and enters the exit chamber 3.10: the sheath 3.3 is supported by the drilled tube 3.2 with the use of the aforementioned gluing compound 3.10. Between the ceramic sheath 3.3 and the ceramic insulator 3.5 there mustn t be any gluing compound, otherwise the gas would not flow from the inlet chamber 1.4, 2.12 to the outlet chamber 1.5, 2.13.

When the gas enters the exit chambers, it cannot go to the terminal block because of the barrier made by the ceramic insulator 3.5, the spacer 3.9, the drilled tube 3.2 and the gluing compound 3.8: the gas is forced to exit the insert 1.3 passing through the holes of the drilled tube 3.2 towards the outlet chamber 1.5, 2.13.

When the purging gas enters the outlet chamber 1.5, 2.13, it is forced to follow the path towards the outlet 1.9. The gaskets 2.6 are deformed and pressed by the elastic element 2.9 between the walls of the sleeve 2.4, the face of the body 2.3 and the drilled tube 3.2 of the insert 1.3. The gaskets 2.6 do not allow the purging gas to go out from the inner volume of the thermometer to the external environment: they can be replaced by a gasket seated between the body 2.3 and the sleeve 2.4. In this case the second or lower mounting part is also modular and comprises as mentioned above a body and a sleeve part which can be mechanically connected, e.g. via a thread. However the second or lower mounting part can be also be monolithic, i.e. the body and the sleeve can be one part.

The outlet gaskets 2.7 are deformed by the elastic element 2.9 between the drilled tube 3.2 of the insert 1.3 and the walls of the sleeve 2.4: they are intended to prevent the purging gas entering the thermowell 1.5 and, accidentally, coming into the process causing pollution. The drilled tube 3.2 must be long enough to come in contact with the outlet gaskets 2.7: this tube 3.2 is e.g. made of a metal alloy and it is safer to put the gaskets 2.6 and 2.7 in contact with it instead of the insert ceramic sheath 3.3, because of the strength of the metal materials and the stricter tolerance that can be achieved machining metal parts instead of ceramic components.

The elastic element 2.9 in figure 2 is a body with a proper length, material and/or stiffness and it must cause a deformation of the gaskets 2.6 and 2.7 in order to assure the gas tightness of the outlet chamber 1.5, 2.13 towards the process and the external environment: it loads the gaskets 2.6 and 2.7 enough to assure a gas tightness without damaging them. This system does not require high gas pressure or flow speed to work properly.

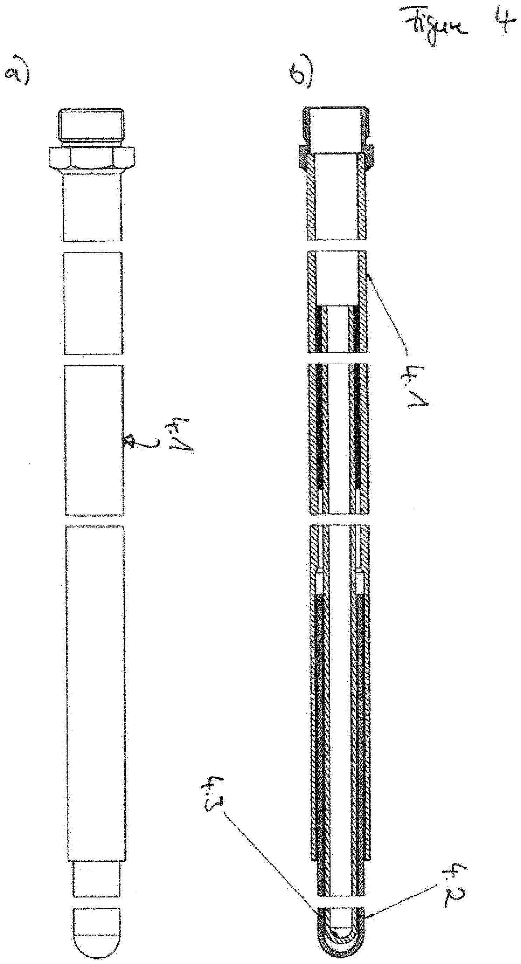

The thermowell 1.2 as shown in figure 4 is the protective sheath placed between the insert 1.3 and the process fluid: it must avoid the direct contact between the process fluid and the insert itself 3.1 and it can be made of metal materials and/or ceramic materials. If the thermowell is undamaged, it is possible to replace a not working insert 1.3 without shutting down the plant: after disassembling the head 1.6 and opening the multiway barrier 2.1 to release the extension cables 1.10, the bolts 2.13 of the neck 1.1 must be unscrewed and the cap 2.2 removed. The compression fitting 2.8 must be loosened and the insert 1.3 can be replaced with a new one. The new insert must be put into the compression fitting and, with this action, the barriers due to the gaskets 2.6 and 2.7 are recovered: the elasticity of the gaskets 2.6 and 2.7 allows the insert 1.3 to slide and so it possible to extract the old insert and to put in a new one. The whole assembly can be assembled following the aforementioned procedure in reverse order, substituting the gaskets with new ones if required.

When the facility is up and running, some process elements can pollute the insert 1.3 of the thermometer: if the thermowell 1.2 has one or more cracks or if it is made of ceramic materials that can be porous at high temperature, the harmful elements can pass through the external sheaths and enter the insert sheath 3.3. If the purging gas flows, the harmful elements are taken away and they come out from the outlet.

As mentioned before, this device can be used when the insert 1.3 is made of materials that cannot work at high temperature with the presence of Oxygen (e.g.: Tungsten-Rhenium thermocouples): in this case, the purging gas brings the Oxygen molecules away from the hot zone and avoid the chemical reaction to occur, protecting the sensor and making its life longer. Without the action of the purging gas, the oxidization of the thermocouple would be very fast (within minutes).

## Claims

1. Modular connecting piece for connecting a terminal head (1.6) to a protecting tube (4.1), comprising:
a first mounting part (2.2) and a second mounting part (2.3, 2.4) for receiving a measuring insert (3.3),
wherein the first mounting part (2.2) is mechanically connectable to the second mounting part,
wherein the first mounting part (2.2) has a first chamber (2.12) in which an electrical connection, especially a terminal block, of the insert is insertable,
wherein the second mounting part (2.3, 2.4) has a second chamber (2.13) into which a shaft portion of the measuring insert (3.3) is insertable,
wherein the first and the second chamber (2.12, 2.13) communicate, when mechanically connected to each other, via an opening between the first and the second mounting part (2.2, 2.3., 2.4), through which opening the shaft portion of the measuring insert is insertable,
wherein a gasket (2.8, 2.6) for sealing the opening in a gas tight manner, when the shaft part of the measuring insert (3.3) is inserted into the opening, is provided in the first and/or second mounting (2.2, 2.3, 2.4) part,
**characterised in that**
the first mounting part (2.2) has an inlet (2.10) for letting a purging gas flow into the first chamber (2.12) of the first mounting part (2.2), and
**in that** the second mounting part (2.3, 2.4) has an outlet (2.11) for letting a purging gas flow out of the second chamber (2.13) of the second mounting part.

2. Modular connecting piece according to claim 1,
wherein the first mounting part (2.2) is mechanically connectable to the second mounting part (2.3) in a gas tight manner by way of a gasket (2.5) between a furrow of the first mounting part (2.2) and a furrow of the second mounting part (2.3, 2.4).

3. Modular connecting piece according to one of the preceding claims,
wherein the second mounting part (2.3, 2.4) has an opening through which the measuring insert (3.3) is insertable into the protective tube (4.1),
and wherein a gasket (2.7) is provided in the second mounting part (2.3, 2.4) which gasket (2.7) seals the opening to the protective tube (4.1) in a gas tight manner, when the insert (3.3) is inserted into the opening.

4. Modular connecting piece according to claim 3,
wherein an elastic element that provides a restoring force (2.9) is provided in the second mounting part (2.4),
which element (2.9) serves to deform and press the gasket (2.6) for sealing the opening towards the first mounting part (2.2) and the gasket (2.7) for sealing the opening to the protective tube (4.1) on opposite sides of the second chamber (2.13) of the second mounting part (2.4).

5. Modular connecting piece according to one of the preceding claims,
wherein a compression fitting or a welding (2.8) welded on the the second mounting part (2.2, 2.3, 2.4) extends into the first chamber (2.12) of the first mounting part (2.2), when connected to the second mounting part (2.3, 2.4).

6. Arrangement comprising a modular connecting piece (2.2, 2.3, 2.4) according to one of the preceding claims and a terminal head (1.6) and the measuring insert (3).

## Patentansprüche

1. Modulares Anschlussstück für den Anschluss eines Anschlusskopfes (1.6) an ein Schutzrohr (4.1), das Folgendes aufweist:
eine erste Armatur (2.2) und eine zweite Armatur (2.3, 2.4) für die Aufnahme eines Messeinsatzes (3.3),
wobei die erste Armatur (2.2) mechanisch mit der zweiten Armatur verbindbar ist,
wobei die erste Armatur (2.2) über eine erste Kammer (2.12) verfügt, in die ein elektrischer Anschluss, insbesondere eine Klemmenleiste, des Einsatzes einsetzbar ist,
wobei die zweite Armatur (2.3, 2.4) über eine zweite Kammer (2.13) verfügt, in die ein Schaftabschnitt des Messeinsatzes (3.3) einsetzbar ist,
wobei die erste und die zweite Kammer (2.12, 2.13), wenn sie mechanisch miteinander verbunden sind, über eine Öffnung zwischen der ersten und der zweiten Armatur (2.2, 2.3, 2.4), durch welche der Schaftabschnitt des Messeinsatzes einsetzbar ist, miteinander kommunizieren,
wobei eine Dichtung (2.8, 2.6) zur gasdichten Abdichtung der Öffnung in der ersten oder zweiten Armatur (2.2, 2.3, 2.4) vorhanden ist, wenn der Schaftabschnitt des Messeinsatzes (3.3) in die Öffnung eingesetzt wird,
**dadurch gekennzeichnet, dass**
die erste Armatur (2.2) über einen Einlass (2.10) verfügt, um einen Spülgasstrom in die erste Kammer (2.12) der ersten Armatur (2.2) einzuleiten, und
**dadurch gekennzeichnet, dass**
die zweite Armatur (2.3, 2.4) über einen Auslass (2.11) verfügt, um einen Spülgasstrom aus der zweiten Kammer (2.13) der zweiten Armatur auszuleiten.

2. Modulares Anschlussstück entsprechend Anspruch 1,
wobei die erste Armatur (2.2) mechanisch mit der zweiten Armatur (2.3) gasdicht mit einer Dichtung (2.5) zwischen einer Nut der ersten Armatur (2.2) und einer Nut der zweiten Armatur (2.3, 24) verbindbar ist.

3. Modulares Anschlussstück entsprechend eines der vorhergehenden Ansprüche,
wobei die zweite Armatur (2.3, 2.4) über eine Öffnung verfügt, durch die der Messeinsatz (3.3) in das Schutzrohr (4.1) einsetzbar ist,
und wobei eine Dichtung (2.7) in der zweiten Armatur (2.3, 2.4) vorhanden ist und diese Dichtung (2.7) die Öffnung zum Schutzrohr (4.1) gasdicht abdichtet, wenn der Einsatz (3.3) in die Öffnung eingesetzt wird.

4. Modulares Anschlussstück entsprechend Anspruch 3,
wobei ein elastisches Element, dass eine Rückstellkraft (2.9) gewährleistet, in der zweiten Armatur (2.4) vorhanden ist
und dieses Element (2.9) dazu dient, die Dichtung (2.6) zur Abdichtung der Öffnung zur ersten Armatur (2.2) und die Dichtung (2.7) zur Abdichtung der Öffnung zum Schutzrohr (4.1) auf gegenüberliegenden Seiten der zweiten Kammer (2.13) der zweiten Armatur (2.4) zu verformen und zusammenzudrücken.

5. Modulares Anschlussstück entsprechend eines der vorhergehenden Ansprüche,
wobei eine Schneidringverschraubung oder eine Schweißung (2.8), die an die zweite Armatur (2.2, 2.3, 2.4) angeschweißt ist, in die erste Kammer (2.12) der ersten Armatur (2.2) ragt, wenn sie mit der zweiten Armatur (2.3, 2.4) verbunden wird.

6. Anordnung, die ein Schutzrohr (4.1), ein modulares Anschlussstück (2.2, 2.3, 2.4) entsprechend eines der vorhergehenden Ansprüche, einen Anschlusskopf (1.6) und den Messeinsatz (3) aufweist.

## Revendications

1. Pièce de raccordement modulaire pour la connexion d'une tête de raccordement (1.6) à un tube de protection (4.1), comprenant :
une première pièce de montage (2.2) et une deuxième pièce de montage (2.3, 2.4) pour la réception d'un insert de mesure (3.3),
la première pièce de montage (2.2) pouvant être connectée mécaniquement à la deuxième pièce de montage,
la première pièce de montage (2.2) comportant une première chambre (2.12),
dans laquelle peut être insérée une connexion électrique, notamment un bornier, de l'insert,
la deuxième pièce de montage (2.3, 2.4) comportant une deuxième chambre (2.13), dans laquelle peut être insérée une partie d'arbre de l'insert de mesure (3.3),
la première et la deuxième chambre (2.12, 2.13) communiquant entre elles lorsqu'elles sont connectées mécaniquement l'une à l'autre, via une ouverture située entre la première et la deuxième pièce de montage (2.2, 2.3, 2.4),
ouverture à travers laquelle la partie d'arbre de l'insert de mesure peut être insérée,
un joint (2.8, 2.6), lequel assure l'étanchéité de manière étanche aux gaz de l'ouverture lorsque la partie d'arbre de l'insert de mesure (3.3) est insérée dans l'ouverture, étant installé dans la première et/ou la deuxième pièce de montage (2.2, 2.3, 2.4),
**caractérisée**
**en ce que** la première pièce de montage (2.2) comporte une entrée (2.10) permettant de laisser circuler un gaz de purge dans la première chambre (2.12) de la première pièce de montage (2.2), et
**en ce que** la deuxième pièce de montage (2.3, 2.4) comporte une sortie (2.11) permettant de laisser circuler un gaz de purge dans la deuxième chambre (2.13) de la deuxième pièce de montage.

2. Pièce de raccordement modulaire selon la revendication 1,
pour laquelle la première pièce de montage (2.2) peut être connectée mécaniquement à la deuxième pièce de montage (2.3) - d'une manière étanche aux gaz - au moyen d'un joint (2.5) installé entre une rainure de la première pièce de montage (2.2) et une rainure de la deuxième pièce de montage (2.3, 2.4).

3. Pièce de raccordement modulaire selon l'une des revendications précédentes,
pour laquelle la deuxième pièce montage (2.3, 2.4) comporte une ouverture à travers laquelle l'insert de mesure (3.3) peut être inséré dans le tube de protection (4.1),
et pour laquelle un joint (2.7) est installé dans la deuxième pièce montage (2.3, 2.4), lequel joint (2.7) assure l'étanchéité de l'ouverture vers le tube de protection (4.1) - de manière étanche aux gaz - lorsque l'insert (3.3) est inséré dans l'ouverture.

4. Pièce de raccordement modulaire selon la revendication 3,
pour laquelle un élément élastique délivrant une force de rappel (2.9) est installé dans la deuxième pièce de montage (2.4),
lequel élément (2.9) sert à déformer et à presser le joint (2.6) afin d'assurer l'étanchéité de l'ouverture vers la première pièce de montage (2.2), et le joint (2.7) afin d'assurer l'étanchéité de l'ouverture vers le tube de protection (4.1) sur les côtés opposés de la deuxième chambre (2.13) de la deuxième pièce de montage (2.4).

5. Pièce de raccordement modulaire selon l'une des revendications précédentes,
pour laquelle un raccord à compression ou une soudure (2.8) soudé sur la deuxième pièce de montage (2.2, 2.3, 2.4) s'étend dans la première chambre (2.12) de la première pièce de montage (2.2) lorsqu'elle est connectée à la deuxième pièce de montage (2.3, 2.4).

6. Ensemble comprenant un tube de protection (4.1), une pièce de raccordement modulaire (2.2, 2.3, 2.4) selon l'une des revendications précédentes, une tête de raccordement (1.6) et l'insert de mesure (3).
